Europäisches Patentamt

European Patent Office

Office européen des brevets

(19)

(11) Numéro de publication: **0 218 522**
A1

(12)

# DEMANDE DE BREVET EUROPEEN

(21) Numéro de dépôt: 86402112.6

(22) Date de dépôt: 26.09.86

(51) Int. Cl.⁴: **H 02 K 21/24,** H 02 K 21/38, H 02 K 37/12, H 02 K 37/20

(30) Priorité: 27.09.85 FR 8514365

(43) Date de publication de la demande: 15.04.87
Bulletin 87/16

(84) Etats contractants désignés: **AT CH DE GB IT LI SE**

(71) Demandeur: **CGEE ALSTHOM Société anonyme dite:,
13, rue Antonin Raynaud, F-92309 Levallois-Perret (FR)**

(72) Inventeur: **Rioux, Christian, 10 Rue Emile Morel,
F-92330 Sceaux (FR)**
Inventeur: **Lucidarme, Jean, 88 Rue Pasteur,
F-91700 Sainte Genevieve des Bois (FR)**
Inventeur: **Guillet, Roger, Résidence Agate 19 rue
Bobillot, F-75644 Paris Cedex 13 (FR)**
Inventeur: **Pouillange, Jean, 7 allée des Sylphides,
F-77410 Gressy en France (FR)**

(74) Mandataire: **Fort, Jacques et al, CABINET
PLASSERAUD 84, rue d'Amsterdam, F-75009 Paris (FR)**

(54) Machine synchrone polyentrefers à aimants permanents.

(57) Machine utilisable comme moteur comprenant un stator ayant une structure fixe amagnétique portant plusieurs rangées de plots magnétiques (12) alternant avec des rangées de plots magnétiques (10) portés par une structure mobile (16, 18) et coopérant avec les plots fixes (12), ainsi que des moyens inducteurs (20, 22) portés par le stator pour créer un champ d'induction suivant un trajet présentant une réluctance variable suivant la position relative des plots fixes (12) et mobiles (10), les plots magnétiques des différentes rangées étant placés vis-à-vis. Les plots d'une au moins des séries de rangées sont constitués par des aimants permanents (12) ou associés à de tels aimants.

## Machine synchrone polyentrefers à aimants permanents

L'invention, faite au Laboratoire d'Electrotechnique de l'Université de Paris VI et XI, Equipe de Recherche associée au CENTRE NATIONAL DE LA RECHERCHE SCIENTIFIQUE n° 070838, concerne les machines électriques à réluctance variable polyentrefers, du type comprenant un stator ayant une structure fixe amagnétique portant plusieurs rangées de plots magnétiques alternant avec des rangées de plots magnétiques portés par une structure mobile et coopérant avec les plots fixes, ainsi que des moyens inducteurs portés par le stator pour créer un champ d'induction suivant un trajet présentant une réluctance variable suivant la position relative des plots fixes et mobiles, les plots magnétiques des différentes rangées étant placés en vis-àvis.

On connaît déjà des machines électriques tournantes du type ci-dessus défini. Le document EP-A-0128 099 décrit par exemple une machine tournante à géométrie discoïde comportant plusieurs disques rotoriques portant chacun une rangée de plots magnétiques et intercalés entre des disques statoriques portant également chacun une rangée de plots en matériau magnétique, toutes les rangées étant réparties dans des zones annulaires de même rayon moyen.

Dans ces machines connues polyentrefers, les moyens inducteurs sont constitués par des bobines d'excitation prévues pour être alimentées en courant polyphasés pour fournir un champ glissant ou un courant continu haché. La présence de plusieurs entrefers de faible épaisseur, pour augmenter le couple dans le cas d'un moteur, tend à réduire les ampère-tours disponibles du fait de la saturation du matériau ferromagnétique. L'invention vise à fournir une machine du type ci-dessus défini dans laquelle l'induction due aux bobines est mieux utilisée.

Dans ce but, l'invention propose une machine dans laquelle les plots d'une au moins des séries de rangées sont constitués par des aimants permanents ou associés à de tels aimants.

Cette disposition permet de cumuler les avantages des aimants, et notamment le fait qu'ils fournissent un champ d'excitation sans consommation électrique et permettent d'atteindre des forces élevées par unité de surface, et ceux des structures polyentrefers, et notamment un rendement et un couple volumique élevés. De plus, les champs moyens d'induction peuvent être relativement faibles, et l'influence des variations d'épaisseur d'entrefer est réduite. L'instabilité d'origine électromagnétique qui apparaît dans une direction orthogonale par rapport au sens du déplacement se traduit par des efforts plus faibles que dans les machines existantes. Les jeux entre disques, dans le cas d'une machine à géométrie "polydiscoïde", peuvent être accrus sans conséquence grave sur le rendement, ce qui simplifie les problèmes mécaniques de centrage. Enfin, la diminution du flux permet de réduire les sections des pièces magnétiques de fermeture du flux et donc l'encombrement.

L'invention se prête à la réalisation de machines très diverses, et notamment de machines tournantes de type polydiscoïde et polycylindrique comme de machines linéaires à champ glissant longitudinal. Elle permet également de réaliser des machines de type Vernier.

Les aimants peuvent avoir également des dispositions très diverses et on peut notamment prévoir :

- pour chaque rangée de plots en matériau ferromagnétique d'une des structures, deux aimants de l'autre structure ayant des aimantations l'une dirigée vers la rangée, l'autre de sens opposé ;

- pour deux rangées de plots en matériau ferromagnétique d'une des structures, les plots des deux rangées ayant un décalage égal à un demi-pas de répartition des plots, une rangée d'aimants de l'autre structure, placée entre les deux rangées de la première, les aimants ayant des aimantations parallèles aux rangées et alternées, étant répartis avec un pas moitié de celui des plots ;

- pour chaque structure, des aimants à aimantation transversale de même sens pour tous les aimants et répartis au même pas sur les deux structures, ces aimants étant séparés par des zones amagnétiques sur les deux structures.

L'invention sera mieux comprise à la lecture de la description qui suit de modes particuliers de réalisation, donnés à titre d'exemples non limitatifs. La description se réfère aux dessins qui l'accompagnent, dans lesquels :

- la Figure 1 est un schéma de principe, en vue développée, montrant une disposition possible des plots et des aimants d'un moteur selon un premier mode de réalisation de l'invention ;

- les Figures 2 et 3, similaires à la Figure 1, montrent deux autres modes de réalisation ;

- la Figure 4 est un schéma montrant une machine tournante polydiscoïde dont les aimants peuvent comporter une des configurations montrées en Figures 1 à 3, en demi-coupe suivant un plan passant par l'axe du rotor ;

- la Figure 5 est une vue en coupe suivant la ligne V-V de la Figure 4 avec une disposition des aimants conforme à la Figure 1 ;

- la Figure 6, similaire à la Figure 4, montre une machine polycylindrique constituant une variante de réalisation de l'invention ;

- la Figure 7, similaire à la Figure 1, montre une variante de disposition ;

- les Figures 8 et 9, encore similaires à la Figure 1, montrent des modes de réalisation applicables à une machine à champ longitudinal ou azimutal ;

- les Figures 10 et 11 montrent à titre d'exemple la variation de flux B en fonction du courant I et celle du courant en fonction du temps dans le cas d'un courant hâché (courbes en traits pleins) et d'un courant sinusoïdal (courbes en tirets) ;

- la Figure 12, similaire à la Figure 4, montre une disposition dont on peut dire qu'elle est "en ligne", et

- les Figures 13 et 14, similaires aux Figures 4 et 5, montrent une disposition dont on peut dire qu'elle est en "barillet".

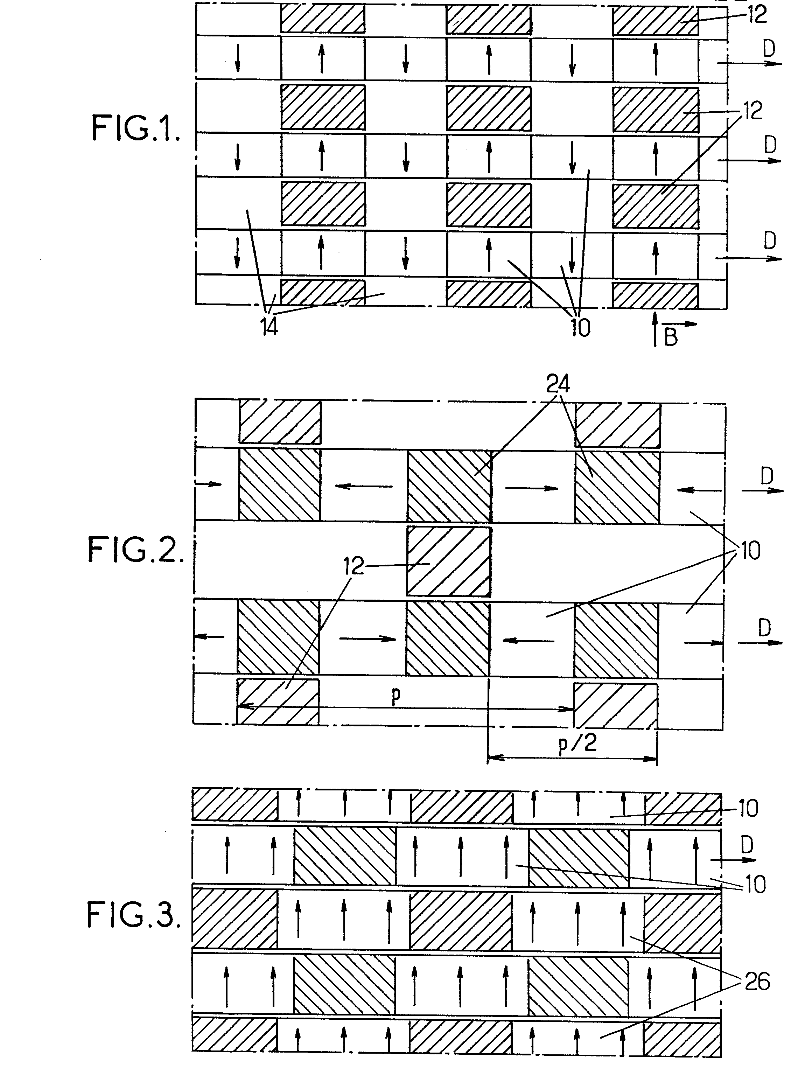

On décrira tout d'abord, en faisant référence aux Figures 1 à 3, des configurations de plots et d'aimants obtenues par répétition suivant une ligne droite (cas d'une machine linéaire) ou un cercle (cas d'une machine tournante) d'un même motif. Pour simplifier, on supposera par la suite que ces configurations appartiennent à une machine tournante polydiscoïde, mais la transposition à des machines d'autres constitutions est immédiate.

Le stator de la machine comporte plusieurs rangées de plots 12 en matériau ferromagnétique, séparés par des intervalles amagnétiques 14 et portés par une structure de fermeture du circuit magnétique (non représentée) munie de bobinages de création d'un champ d'excitation. Dans la pratique, les deux rangées extrêmes de plots 12 peuvent être portés par des flasques tandis que les rangées intermédiaires (au nombre de deux dans le cas illustré) sont portées par des disques en matériau isolant, ou du moins amagnétique, solidaires de ladite structure.

Le rotor de la machine comprend de son côté des disques calés sur un arbre rotatif commun (non représenté) portant chacun une rangée d'aimants adjacents 10 dont l'aimantation (figurée par des flèches) est alternée et dirigée perpendiculairement à la direction de déplacement D. Les bobinages inducteurs peuvent notamment être du type fournissant un champ d'induction tournant dont les lignes de force traversent les disques dans une direction globalement parallèle à la direction d'aimantation.

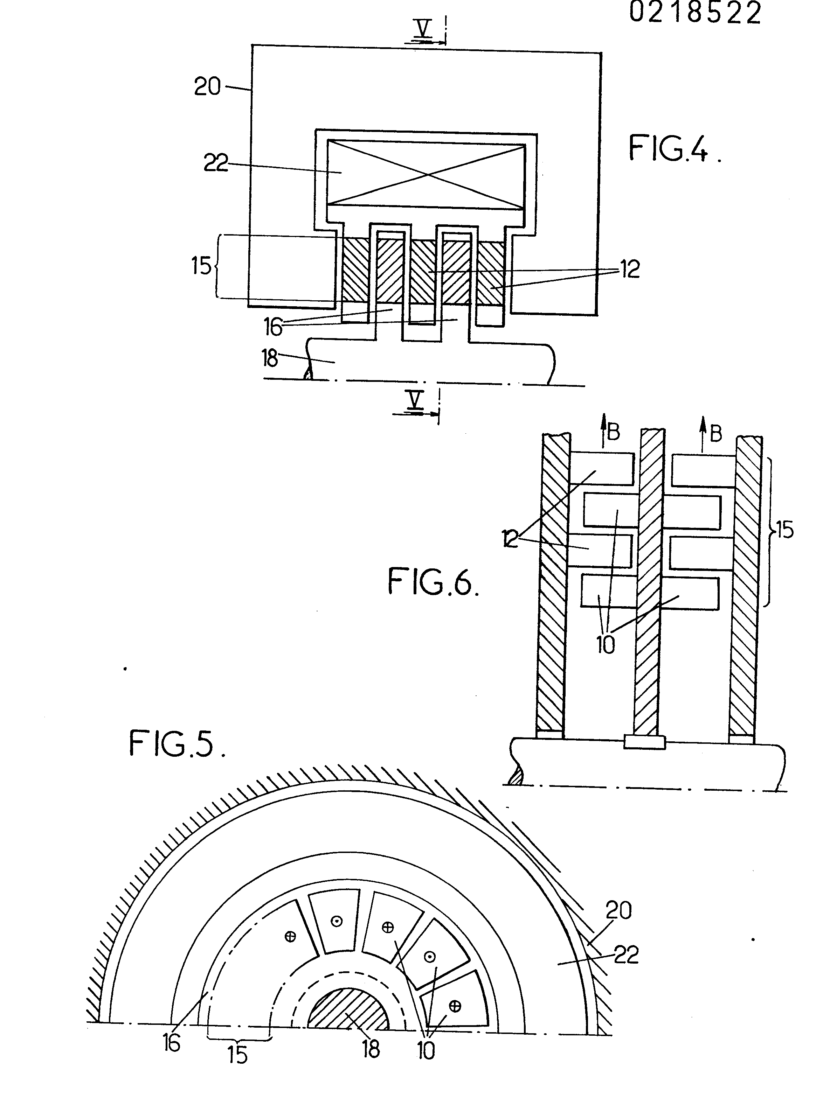

Les Figures 4 et 5 montrent une constitution possible de la machine polydiscoïde : les plots et les aimants 10 sont répartis dans une zone annulaire 15. Les disques rotoriques 16 sont calés sur un arbre 18 porté par un bâti non représenté. Ce bâti assure la rigidité de la machine et contient le circuit magnétique de retour 20 à l'intérieur duquel est placé le bobinage 22 de création d'un champ unipolaire. Le stator peut avoir une constitution connue, par exemple celle décrite dans le document EP-A- 0 128 099 déjà mentionné.

Dans le cas d'une constitution polycylindrique, la disposition peut être celle montrée en Figure 6, dont les plots et aimants ont une disposition comparable à celle des plots rotoriques et statoriques de la machine décrite dans la demande de brevet déposée ce jour par le même titulaire pour "Machine tournante à réluctance variable à polyentrefers" sous le numéro FR 85 14 364.

La Figure 2 montre une seconde disposition possible des aimants, qu'on peut appeler "à concentration de flux", également utilisable dans une machine du genre montré en Figures 4-5 ou en Figure 6. Le stator comporte des plots magnétiques 12 disposés en rangées parallèles, les plots de deux rangées successives étant décalés de p/2, p désignant le pas de répartition des plots. Le rotor comporte de son côté plusieurs rangées parallèles d'aimants 10 d'orientation alternée, mais toujours parallèle à la direction de déplacement D. Les aimants 10 sont séparés par des parties amagnétiques 24. Leur pas de répartition, dans le cas d'une machine synchrone dont le rotor tourne à la vitesse du champ tournant, est égal à p/2, et leur nombre est égal au double de celui des plots.

Dans le cas de la Figure 3, le rotor et le stator comportent l'un et l'autre des aimants, respectivement 10 et 26. Tous les aimants présentent la même orientation, perpendiculaire à la direction de déplacement D.

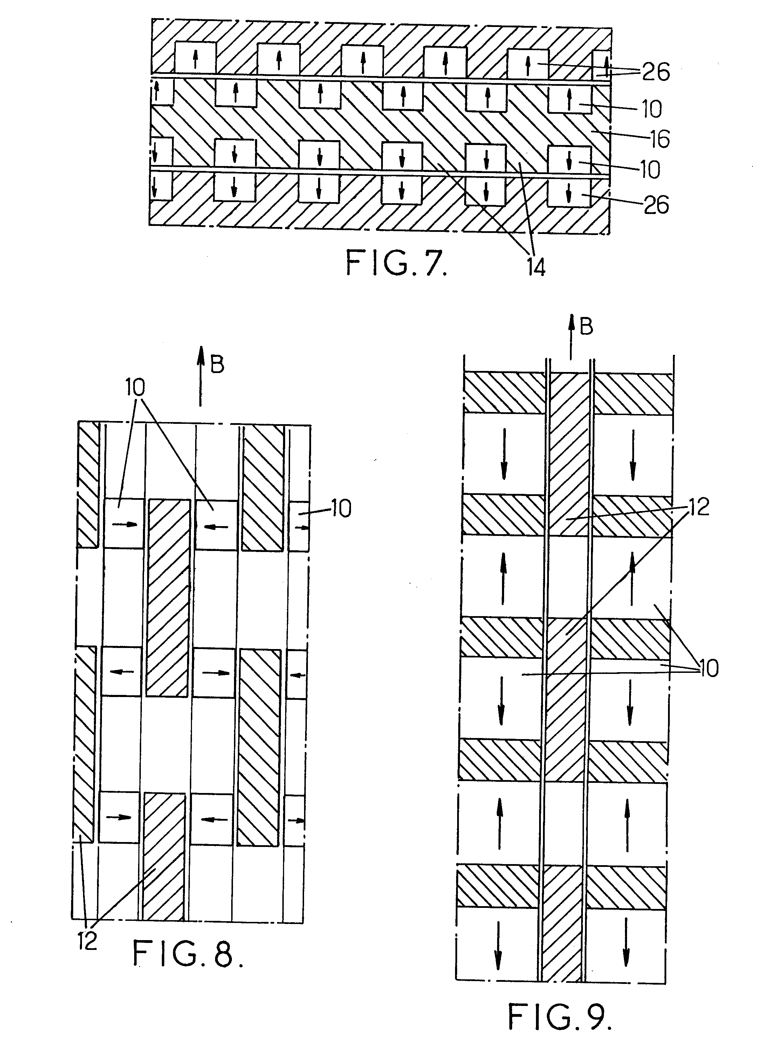

Les motifs de répartition des plots et des aimants qui viennent d'être décrits peuvent être combinés. La Figure 7 montre l'association en quinconce des motifs montrés en Figure 3.

Dans le cas d'une machine à champ longitudinal pouvant être une machine linéaire ayant la constitution d'ensemble du type décrit dans la demande de brevet déposée ce jour au nom du même titulaire sous le titre "Moteur électrique polyphasé à réluctance variable" sous le n° FR 85 14 363 ou une machine tournante à champ azimutal, on peut utiliser les dispositions montrées en Figures 8 et 9. Dans le cas de la figure 8, les aimants 10 portés par la structure mobile ont des orientations perpendiculaires à la direction de déplacement D et alternées dans une même rangée. Les aimants en regard de deux rangées adjacentes ont des sens d'aimantation opposés. Les plots 12 du stator ont un pas de répartition double de celui des aimants 10 et sont disposés en quinconce dans deux rangées successives. Dans le cas de la figure 9, les aimants 10 d'une même rangée ont une aimantation longitudinale alternée. D'autres dispositions peuvent être réalisées en combinant les précédentes.

Par ailleurs un moteur Vernier peut être constitué en prévoyant un nombre différent d'éléments sur les structures fixe et mobile, par exemple $n$ plots 12 et $2(n+1)$ aimants 10 dans le cas de la Figure 1.

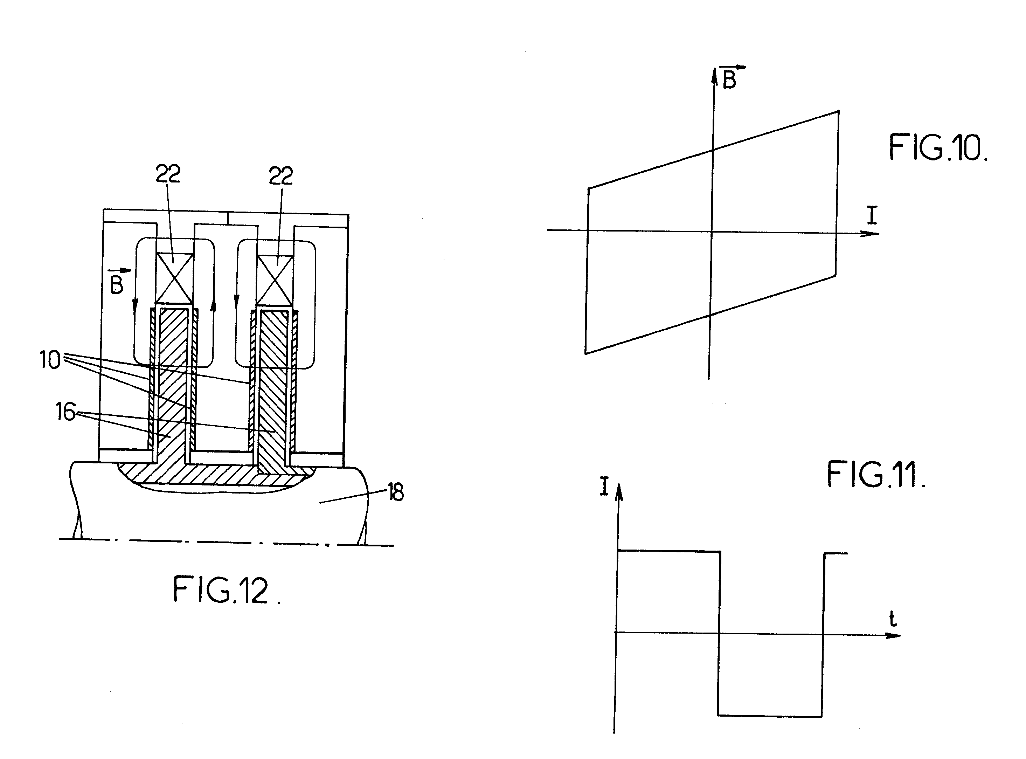

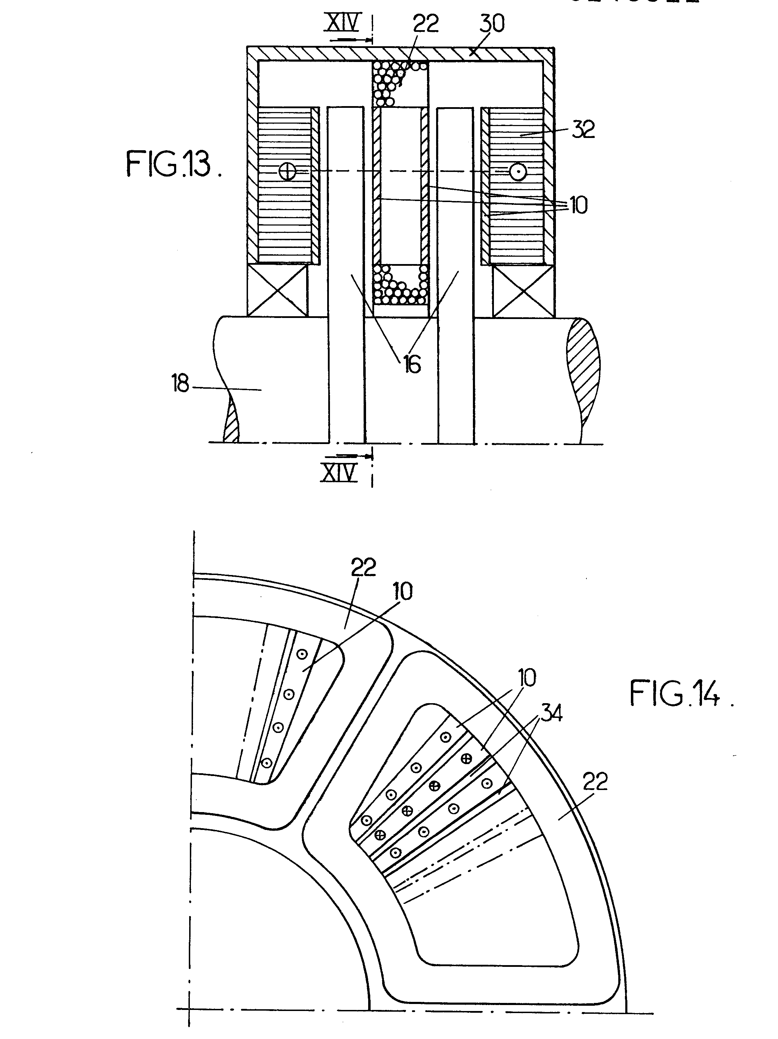

Les figures 10 et 11 montrent la variation du flux dans le cas des machines représentées. On voit que la variation s'effectue dans les quatre quadrants, d'où des flux de retour inférieurs et l'absence de champ d'excitation.

La figure 12, où les organes correspondent à ceux de la figure 4 sont désignés par le même numéro de référence, montre une configuration en ligne. Le stator de la machine comporte des bobines 22 de création de champs d'induction, portées par une structure de fermeture des flux B. Cette structure est solidaire de disques que portent les aimants 10 répartis régulièrement. Le rotor porte cette fois les plots ferromagnétiques.

La machine montrée en figures 13 et 14 (où le stator seul est représenté) a une disposition que l'on peut considérer comme "en barillet". Le disque statorique unique (plusieurs disques peuvent cependant être prévus) est encadré par deux disques rotoriques 16. Ce disque rotorique est porté par une structure support 30 qui n'a pas de rôle dans la fermeture du flux, qui s'effectue par deux flasques terminaux 32, feuilletés en spirale. Les bobinages statoriques 22 encerclent chacun une zone occupée, sur les deux faces du disque, par des aimants alternés 10, séparés par des intervalles étroits non ferromagnétiques 34. Le remplissage entre les deux faces n'est parcouru que par un flux magnétique axial et peut être constitué par de l'isolant dans lequel sont répartis des canaux ferromagnétiques, constitués par exemple par une dispersion.

Les disques 16 peuvent de leur côté être constitués par des plots en matériau ferromagnétique noyés dans une matrice isolante assurant la rigidité, avec une disposition similaire à celle des aimants 10 sur la figure 5.

REVENDICATIONS

1. Machine électrique à réluctance variable polyentrefers, comprenant un stator ayant une structure fixe amagnétique portant plusieurs rangées de plots magnétiques alternant avec des rangées de plots magnétiques coopérant avec les plots fixes et portés par une structure mobile comportant un arbre ainsi que des moyens inducteurs portés par le stator pour créer un champ d'induction suivant un trajet présentant une réluctance variable suivant la position relative des plots fixes et mobiles, les plots magnétiques des différentes rangées étant placés en vis-à-vis, caractérisée en ce que les plots de l'une des structures et une seule sont constitués par des aimants permanents ou associés à de tels aimants, et en ce que les moyens inducteurs portés par le stator créent un champ d'induction axial polyphasé, de telle sorte que l'arbre du moteur n'ait pas de rôle dans la fermeture du flux.

2. Machine selon la revendication 1, caractérisée en ce que la structure mobile porte des aimants (12)

3. Machine selon la revendication 2, caractérisée en ce que, le stator comportant uniquement des rangées de plots (12) autres que des aimants, la structure mobile comporte, dans chaque rangée, deux aimants (10) ayant des aimantations l'une dirigée vers la rangée, l'autre de sens opposé.

4. Machine selon la revendication 2, caractérisée en ce que, le stator comportant des rangées successives de plots (12), les plots de deux rangées successives étant décalés d'un demi-pas de répartition des plots, la structure mobile porte, entre deux rangées successives de plots, des aimants (10) ayant des aimantations parallèles aux rangées et alternées, et répartis avec un pas moitié de celui des plots.

5. Machine selon la revendication 2, caractérisée en ce que les deux structures comportent des aimants à aimantation transversale de même sens pour tous les aimants et répartis au même pas sur les deux structures, ces aimants étant séparés par des zones amagnétiques sur les deux structures.

6. Machine selon la revendication 5, caractérisée en ce que deux rangées d'aimants successives de l'une des structures sont constituées d'aimants (26) décalés d'un demi-pas tandis que les aimants (10) des deux rangées successives correspondantes de l'autre structure sont alignés.

7. Machine selon la revendication 2 à champ longitudinal, caractérisée en ce que les aimants (10) portés par la structure mobile ont des orientations perpendiculaires à la direction de déplacement (D) et alternées dans une même rangée, les aimants en regard de deux rangées adjacentes ayant des sens d'aimantation opposés, et en ce que les plots (12) du stator ont un pas de répartition double de celui des aimants (10) et sont disposés en quinconce dans deux rangées successives.

8. Machine selon la revendication 1 à champ longitudinal, caractérisée en ce que l'une des structures comporte des aimants (10) à aimantation longitudinale alternée dans chaque rangée.

9. Machine tournante selon la revendication 1, caractérisée en ce que le rotor constituant structure mobile comporte des disques (16) portant lesdits plots répartis angulairement, alternés avec au moins un disque statorique portant des bobines (22) réparties angulairement de création d'un champ axial, chaque bobine entourant sur chaque face du disque plusieurs plots et en ce que les plots de l'une des structures mobile ou fixe sont constitués par des aimants orientés axialement et à alternance d'aimantation dans le sens circonférentiel (Figures 13-14).

0218522

FIG.1.

FIG.2.

FIG.3.

0218522

FIG.4.

FIG.6.

FIG.5.

FIG.7.

FIG.8.

FIG.9.

FIG.10.

FIG.11.

FIG.12.

22    22

10

16

18

B

B

I

t

FIG.13 .

XIV

22    30

32

10

16

18

XIV

FIG.14 .

22    10

10    34

22

Office européen
des brevets

# RAPPORT DE RECHERCHE EUROPEENNE

0218522

Numéro de la demande

EP 86 40 2112

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-1 475 948 (HATOT)<br>* Page 2, colonne de droite, lignes 6-58; page 3, colonne de droite, ligne 19 - page 4, colonne de droite, ligne 7; page 5, colonne de gauche, lignes 33-38; figures 1-11 * | 1 | H 02 K 21/24<br>H 02 K 21/38<br>H 02 K 37/12<br>H 02 K 37/20 |
| A | | 3,4,7,<br>9 | |
| | --- | | |
| Y | US-B- 526 289 (WESTINGHOUSE)<br>* Colonne 3, ligne 54 - colonne 11, ligne 29; figures 1,2 * | 1 | |
| | --- | | |
| A | EP-A-0 143 029 (TELEMECANIQUE ELECTRIQUE)<br>* Page 18, ligne 33 - page 20, ligne 5; figures 8,9 * | 1,2,5,<br>6 | |
| | --- | | |
| Y | WO-A-8 502 503 (PORTESCAP)<br>* Page 3, ligne 20 - page 5, ligne 15; figures 1-9 * | 1,2 | |
| | --- | | |
| Y | US-A-2 797 346 (RANSEEN)<br>* Colonne 9, ligne 56 - colonne 10, ligne 64; figure 7 * | 1 | |
| | --- -/- | | |

DOMAINES TECHNIQUES
RECHERCHES (Int. Cl.4)

H 02 K

Le présent rapport de recherche a été établi pour toutes les revendications

| Lieu de la recherche | Date d'achèvement de la recherche | Examinateur |
|---|---|---|
| LA HAYE | 06-01-1987 | TIO K.H. |

## Office européen des brevets

# RAPPORT DE RECHERCHE EUROPEENNE

0218522

Numéro de la demande

EP 86 40 2112

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int Cl. 4) |
|---|---|---|---|
| A | GB-A-2 139 821 (CATERPILLAR)<br>* Page 2, lignes 35-42; figures 1,6 * | 1-3 | |
| | --- | | |
| A | FR-A- 538 534 (SPERRY)<br>* Page 2, ligne 38 - page 3, ligne 2; figures 1,3 * | 1,5 | |
| | --- | | |
| A | EP-A-0 155 877 (C.E.M.)<br>* Page 8, ligne 23 - page 9, ligne 31; figures 10,11 * | 2-4,8 | |
| | ----- | | |

DOMAINES TECHNIQUES
RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 06-01-1987 | TIO K.H. |

OEB Form 1503 03 82